# EUROPEAN PATENT SPECIFICATION

(11) **EP 1 749 614 B1**
(45) Date of publication and mention of the grant of the patent: **21.09.2011**
(21) Application number: 06015378.0
(22) Date of filing: 24.07.2006
(51) Int. Cl.: B23K 20/12, B23K 20/227, B23K 101/18, B23K 101/34, B23K 103/20

(54) **Friction stir spot welding method and apparatus for joining two overlapping members using an interposed member**
Drehendes Reibungspunktschweissverfahren und Vorrichtung zur Verbindung zweier überlappender Teile unter Verwendung eines Zwischenteiles
Procédé et dispositif de soudage par friction agitation pour assembler deux éléments par recouvrement en utilisant un élément interposé

(30) Priority: 02.08.2005 JP 2005224457; 02.08.2005 JP 2005224453
(43) Date of publication of application: 07.02.2007
(73) Proprietor: Mazda Motor Corporation, Aki-gun, Hiroshima 730-8670 (JP)
(72) Inventor: Gendou, Toshiyuki Mazda Motor Corp., Hiroshima 730-8670 (JP); Nishiguchi, Katsuya Mazda Motor Corp., Hiroshima 730-8670 (JP); Asakawa, Motoyasu Mazda Motor Corp., Hiroshima 730-8670 (JP); Takase, Kenji Mazda Motor Corp., Hiroshima 730-8670 (JP); Shoji, Yohei Mazda Motor Corp., Hiroshima 730-8670 (JP)
(74) Representative: Müller-Boré & Partner Patentanwälte

(56) References cited:
- US-A1- 2004 079 787
- US-A1- 2005 035 180
- PATENT ABSTRACTS OF JAPAN vol. 2003, no. 12, 5 December 2003 (2003-12-05) -& JP 2006 043720 A (MAZDA MOTOR CORP), 16 February 2006 (2006-02-16)
- PATENT ABSTRACTS OF JAPAN vol. 2002, no. 09, 4 September 2002 (2002-09-04) -& JP 2002 153978 A (MAZDA MOTOR CORP), 28 May 2002 (2002-05-28)
- PATENT ABSTRACTS OF JAPAN vol. 2002, no. 08, 5 August 2002 (2002-08-05) -& JP 2002 103061 A (HITACHI SETSUBI ENG CO LTD), 9 April 2002 (2002-04-09)

## Description

The present invention relates to a frictional spot joining method and apparatus according to the preamble of claims 1 and 5 respectively, in which first and second metal members are provided to at least partly lap over, the first metal member is softened and made in a plastic flow state by a frictional heat generated by a rotating tool, whereby the metal members are jointed.

Conventionally, a frictional spot joining in which a lapping portion of first and second metal members is received by a receiving tool, a rotating tool disposed on an opposite side relative to the receiving tool is pushed against the metal members from a side of the first metal member, the first metal member is softened and made in a plastic flow state by a frictional heat generated by the rotating tool, whereby the metal members can be jointed, is known (see, for example, US Patent Application publication No. 2005/0035180 A1 , on which the preamble of claims 1 and 5 is based).

In particular, the frictional spot joining disclosed in the above-described publication discloses a spot joining of a steel plate having a zinc plating layer thereon and an aluminum plate that lap over. Herein, by the rotating tool being pushed against the steel plate and aluminum plate from a side of the aluminum plate, part of the aluminum plate is softened and made in the plastic flow state, an oxidation film formed on the aluminum plate is destroyed, and the zinc plating layer on the steel plate is pushed out. As a consequence, both new uncovered surfaces of the steel and aluminum plates are joined together in a solid state.

Meanwhile, for the purpose of a weight reduction, a structure using the steel plate and the aluminum plate has been widely applied to a vehicle body or the like of automotive vehicles. Herein, the above-described spot joining is useful to join the steel plate and the aluminum plate. For example, this spot joining may be applied to an aluminum-alloy reinforcement for reinforcing a trunk lid of a vehicle body and a steel bolt retainer equipped with a bolt for attaching a hinge to the trunk lid.

Herein, according to the above-described frictional spot joining, the rotating tool applies a relatively large pressing force to the first and second metal members in a perpendicular direction to their faces. Accordingly, the metal members need to be clamped at a portion other than their support portion. However, an area of a tip of the receiving tool is generally almost the same as that of a tip of the rotating tool or less, and the metal members that lap over are received directly by the receiving tool during the spot joining. Thus, there is a problem that some deformation would occur at the first and second metal members pressed by the rotating tool, thereby providing ill-fitting of the metal members relative to other members.

A modification of the receiving tool having a larger tip area may be useful to prevent the above-described deformation of the metal members. This modification, however, might not work well in cases where the first and second metal members are clamped by a clamping device at adjacent portions of their joining portion, the adjacent portions are not of a flat shape (i.e., rough surfaces), and the spot joining is conducted by a joining robot that has a rotating tool and a receiving tool and is controlled to move as a unit. Because there is a problem that the receiving tool would interfere with the clamp device, so the metal members could not be received properly by the receiving tool. This may be also a problem in case the metal members do not have a large enough flat area to provide a proper joining.

Further, in a case where a metal plating layer (for example, a zinc plating layer) is formed on a surface of the second metal member (for example, a steel plate), when the spot joining is conducted, the metal plating layer is or may be softened or melt with the frictional heat generated by the rotating tool and the second metal member receives a very large pressure from the receiving tool. Thereby, there is a problem that part of the metal plating layer formed on the surface of the second metal member would be separated from that surface, so that a corrosion resistance of the second metal member would deteriorate extremely. Further, the separated part of the metal plating layer from the second metal member would be accumulated on the tip of the receiving member, so that a location of the receiving tool relative to the second metal member would not be properly placed during the spot joining. Thus, there is also a problem that a joining quality of the both metal member would deteriorate. Also, it might be troublesome to provide an additional work step to remove the above-described accumulated metal plating layer.

US2004/0079787 A1 discloses a friction stir welding method and friction stir welding apparatus comprising a main axis motor for rotating a tool, an axial moving apparatus for moving the tool in a direction of the rotation axis and a welding direction moving apparatus for moving the tool alone a weld line of a welded material.

JP 2002/153978 A describes a method and device for spot welding comprising a rotating joining tool and a backing and pressurizing mechanism for pushing up a joining point of the work and pressurizing it against the joining tool.

The present invention has been devised in view of the above-described problems, and an object of the present invention is to produce a high-quality superior joining product by properly suppressing the above-described deformation of the first and second metal members by the rotating tool, by properly suppressing the above-described separation of the metal plating layer from the second metal member to maintain the carrion resistance, and/or by preventing the above-described deterioration of the joining quality of the metal members.

This project is solved by the features of the independent claims 1 and 5. Preferred embodiments of the present invention are subject of the dependent claims.

According to the present invention, there is provided a frictional spot joining method, in which first and second metal members that lap over are jointed substantially in a solid state with a joining gun having a rotating tool and a receiving tool that are disposed to face each other, the second metal member having a higher melting point than the first metal member and a metal plating layer at least partly formed on its surface, the rotating tool being configured to be pushed against the first metal member under a rotation such that the first and second metal members are pressed against the receiving tool and the first metal member is softened and made substantially in a plastic flow state by a frictional heat generated by the rotating tool, the method comprising a step of providing an interposed member at or near a joining portion of the first and second metal members so as to be located on a side of the second metal member, the interposed member and the first and second metal members at least partly lapping over being configured to be located between the rotating tool and the receiving tool of the joining gun at a spot joining, the interposed member having a receiving portion located on a side of the rotating tool and a contacting portion located on a side of the receiving tool, the receiving portion being operative to contact the metal plating layer of the second metal member at the spot joining and having an area that is larger than an area of a tip of the rotating tool, the contacting portion being operative to contact the receiving tool of the joining gun at the spot joining, a step of locating the joining gun in a joining position, and a step of pushing the rotating tool under the rotation against the first metal member in a state in which the receiving portion of the interposed member contacts the metal plating layer of the second metal member and the contacting portion of the interposed member contacts the receiving tool of the joining gun, whereby the first and second metal members can be pressed against the receiving tool of the joining gun via the interposed member.

According to the above-described frictional spot joining method, the rotating tool and the receiving tool of the joining gun are located in the joining position and the first and second metal members are pushed against the interposed member by the rotating tool in the state in which the receiving portion of the interposed member contacts the metal plating layer of the second metal member and the contacting portion of the interposed member contacts the receiving tool of the joining gun. Namely, the first and second metal members are pressed against the receiving tool of the joining gun via the interposed member.

Then, part of the metal plating layer on the second metal member is softened by the frictional heat generated by the rotation of the rotating tool, and the softened part of the metal plating layer is pushed out or moved by pushing or operation of the rotating tool, whereby the first and second metal members can be joined substantially in the solid state with substantially no metal plating layer remaining at the joining portion between the first and second metal members.

Accordingly, since the both metal members are pressed against the interposed member by the rotating tool, substantially without a direct contact between the receiving tool having a small area and the second metal member, any improper deformation of the both metal members can be avoided during the pressing and the pressure applied to the second metal member from the interposed member can be reduced properly. Thereby, the first and second metal members can be received by the receiving member surely, so they are spot-joined surely and properly. Also, the metal plating layer on the surface of the second metal member can be substantially prevented from being separated from the metal member's surface by the interposed member, and any accumulation of the separated plating layer on the receiving member and the interposed member can be prevented properly. Thus, a deterioration of corrosion resistance or joining quality of the metal members can be prevented, so a high-quality superior joining product of the metal members can be obtained. Herein, it is preferable that the interposed member is made of metal that has a melting point lower than a temperature of the frictional heat generated at the joining.

Further, it is preferable that the first metal member is an aluminum-alloy plate, the second metal member is a steel plate, and the metal plating layer is a zinc plating layer. Thereby, the zinc plating layer can be prevented from being separated from the steel plate at the spot joining and any accumulation of the separated zinc plating layer on the receiving member can be prevented properly.

Also, according to the present invention, there is provided a frictional spot joining apparatus according to claim 5.

According to the frictional spot joining apparatus, a proper joining apparatus that preferably can perform the above-described frictional spot joining method can be provided. Thereby, substantially the same effects described above can be obtained.

Further, it is preferable that the interposed member comprises a clamping tool that includes a clamp portion to clamp a portion of the second metal member near the joining portion. Also, it is preferable that the interposed member comprises a second clamping tool that includes a clamp portion to clamp a portion of the second metal member near the joining portion, and there is provided a first clamping tool that is provided to face the second clamping tool and includes a clamp portion to clamp a portion of the first metal member near the joining portion.

Thereby, the first and second metal members in the at least partly lapping state are clamped at their first and second clamp portions, and herein the receiving portion of the second clamping tool contacts the face of the second metal member at the joining portion. The joining gun is moved by the moving device between the joining conducting position for conducting the spot joining and the standby position away from the joining conducting position. In the state of the joining gun in the joining conducting position, the receiving tool of the joining gun contacts the contacting portion of the second clamping tool, and the rotating tool is rotated and pushed against the first and second metal members by the rotating-tool drive device. Thereby, the first and second metal members are pressed against the receiving tool of the gun and the first metal member is softened and made in a plastic flow state by the frictional heat generated by the rotating tool, so the first and second metal members are joined by the spot joining.

Accordingly, as described above, there are provided the first and second tooling tools, the second tooling tool comprises the receiving portion and the contacting portion with the receiving tool, and there are provided the joining gun and the moving deice. Thereby, the first and second metal members can be surely clamped at the first and second clamp portions of the first and second clamping tool, and the surface of the second metal member at the joining portion (at a joining corresponding portion) can be received properly by the receiving portion of the second clamping tool, so that the both metal members can be pressed against the receiving portion by the rotating tool without any improper deformation of the both metal members and they are spot-joined surely and properly. As a consequence, a high-quality superior joining products of the first and second metal members can be obtained and also a well-fitting of the metal members relative to other members can be provided. Also, since the spot joining is configured to comprise the integrated rotating tool, receiving tool and rotating tool drive device and to be moved by the moving device as a unit between the joining conducting position and the standby position, an efficiency of the joining operation can be improved.

Further, it is preferable that above-described clamping tool comprises the clamp portion and the receiving potion that are formed separately, and there is provided a position adjusting mechanism operative to adjust a relative position of the clamp portion to the receiving portion in a direction at an angle different from 0° or 180°, preferably substantially perpendicular to a face of the second metal member (joining axis parallel direction) at the joining portion. The position adjusting mechanism may comprise a structure in which the second clamp portion or the receiving portion are provided so as to be movable relative to a base portion of the second clamping tool in the above-described joining axis preferably substantially parallel direction and there is provided a biasing means to bias or urge them toward the second metal member, or a structure in which one or a plurality of spacers with various thickness are provided between the base portion of the second clamping tool and the second clamp portion or the receiving portion of the second clamping tool.

Thereby, since the second clamping tool is comprised of the second clam portion and the receiving portion that are made separately and there are provided the above-described the position adjusting mechanism, even in a case where a position of clamping the metal members is away from a position of joining the metal members and a distance between these positions is improperly changed, the joining portion of the metal members can be received surely and properly by the receiving portion in a state of the metal members clamped at the respective clamp portions.

Further, it is preferable that the first metal member is the aluminum-alloy plate, the second metal member is the steel plate, there are provided a plurality of joining portions at the first and second members, and there are provided a support member to support a part between adjacent joining portions of the first and second members from a side of the first clamping tool.

Thereby, the rotating tool pushes the aluminum-alloy plate and steel plate from the side of the aluminum-alloy plate and thereby the aluminum-alloy plate is softened and made in the plastic flow, so the two plates can be joined such that new uncovered surfaces of the both plates contact each other directly. And, an improper deformation of the aluminum-alloy plate due to a heat expansion can be suppressed properly, so the high-quality joining can be provided.

It is preferable that the above-described moving device is a robot. Thereby, the joining gun can be moved between the joining conduction position and the standby position properly and quickly.

Other features, aspects, and advantages of the present invention will become apparent from the following description which refers to the accompanying drawings.
FIG. **1** is a side view of a robot equipped with a joining gun of a frictional spot joining apparatus of an embodiment **1.**
FIG. **2** is a side view of the joining gun.
FIG. **3** is a partial sectional view of a major part of a rotating tool.
FIG. **4** is a side view of a work holding device of the frictional spot joining apparatus.
FIG. **5** is a plan view of the work holding device.
FIG. **6** is a partial sectional elevation view of the work holding device.
FIG. **7** is a bottom view of a clamp arm, a second clamping tool and others.
FIG. **8** is a plan view of a support member.
FIG. **9** is a sectional view taken along line IX-IX of FIG. **8****.**
FIG. **10** is a sectional view taken along line X-X of FIG. **8****.**
FIG. **11** is a longitudinal sectional view of the second clamping tool, a position adjusting mechanism and others.
FIG. **12** is a longitudinal sectional view of the second clamping tool, the position adjusting mechanism and others.
FIG. 13 is a bottom view of a trunk lid.
FIG. **14** is a longitudinal sectional view of the trunk lid and first and second metal members.
FIG. **15** is a longitudinal sectional view of the trunk lid and first and second metal members.
FIG. **16** is a sectional view when a spot joining is conducted.
FIG. **17** is a sectional view when a spot joining is conducted.
FIG. **18** is a sectional view when the spot joining is conducted.
FIG. **19** is a sectional view when the spot joining is conducted.
FIG. **20** is a longitudinal sectional view of the second clamping tool, a position adjusting mechanism and others of an embodiment 2.
FIG. **21** is a longitudinal sectional view of the second clamping tool, a position adjusting mechanism and others of the embodiment 3.

Hereinafter, preferred embodiments of the present invention will be described referring to the accompanying drawings. It should be understood that even though embodiments are separately described, single features thereof may be combined to additional embodiments.

### EMBODIMENT 1

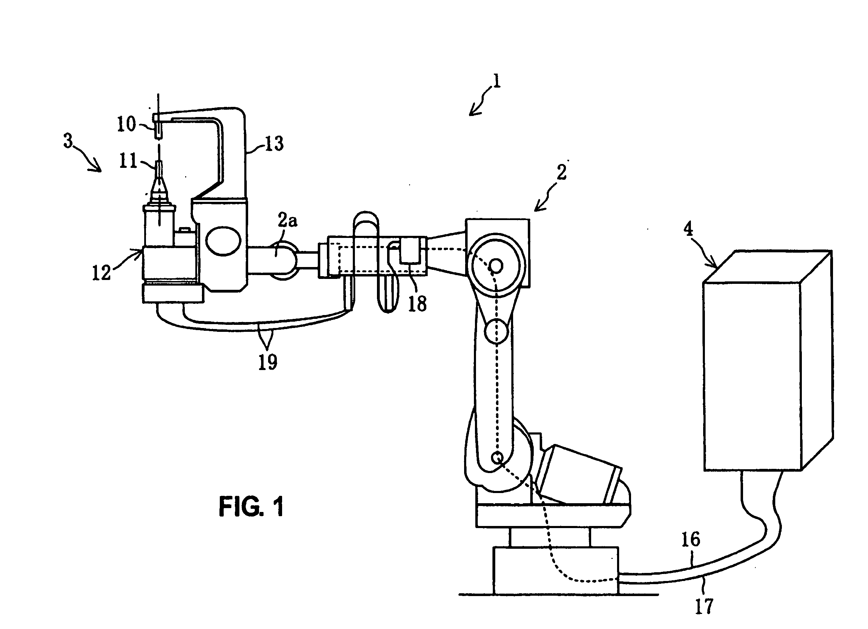

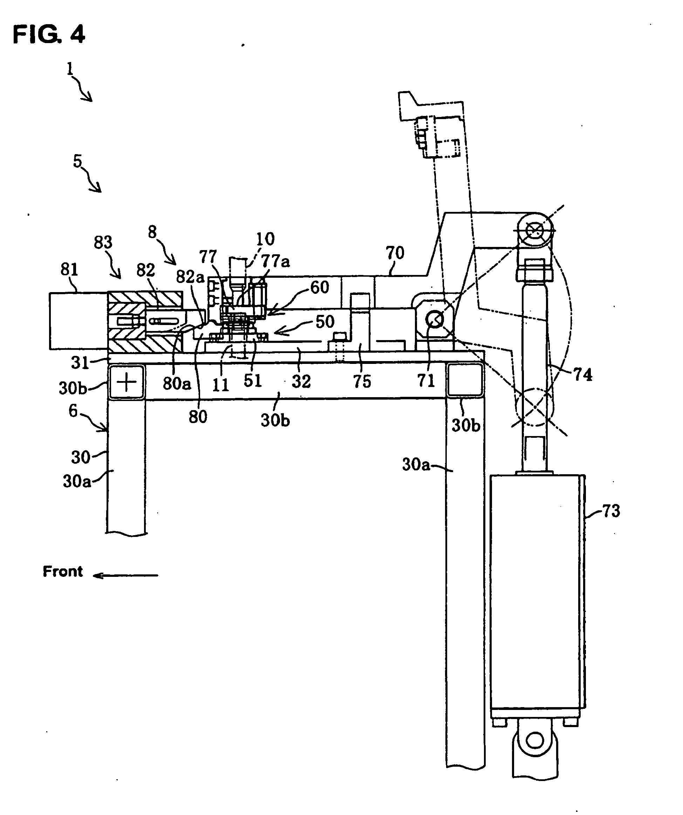

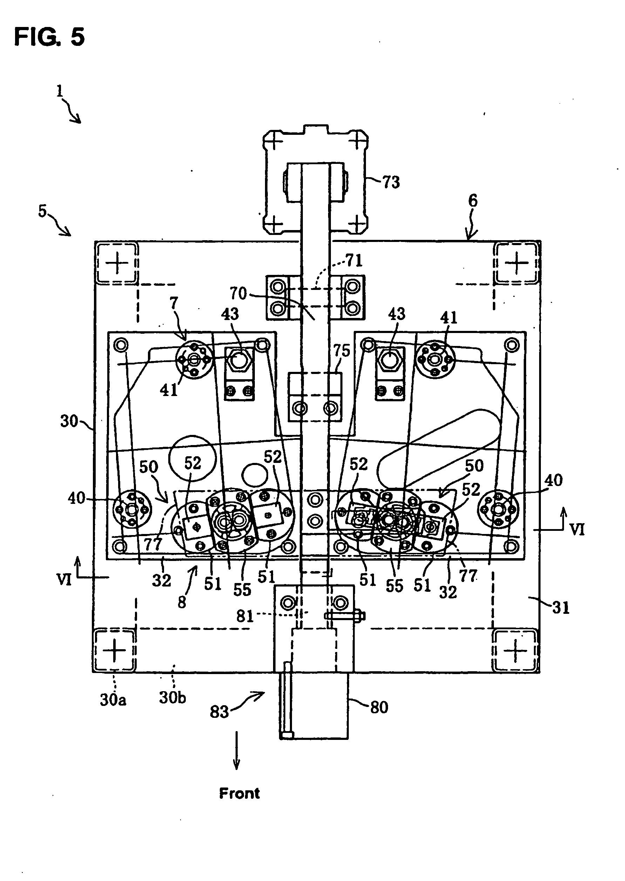

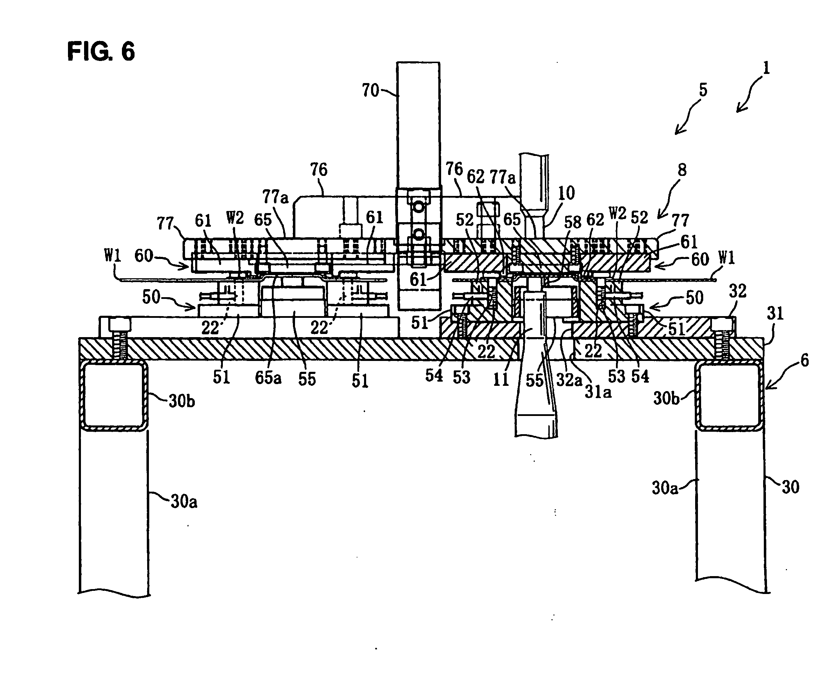

A frictional spot joining apparatus **1** comprises a robot **2** equipped with a joining gun **3** (see FIGS. **1 - 3**), a control device **4** operative to control the robot **2** and the joining gun **3** (see FIG. **1****)** and a work holding device **5** operative to hold first and second metal members **W1, W2** at least partly lapping over to be joined by the joining gun **3** in a specified (predetermined or predeterminable) position (see FIGS. **4** - **6**).

As shown in FIG. **1****,** the robot **2** is, for example, a six-axis multiple-articulated type of robot, and has the joining gun **3** at or on a tip of a robot hand **2a**. The robot **2** moves the joining gun **3** to a joining conducting position for conducting a spot joining to the first and second metal members **W1, W2** held by the work holding device **5** in the specified (predetermined or predeterminable) position and to a standby position where it is away from the joining conducting position. Thus, the robot **2** corresponds to a preferred moving device.

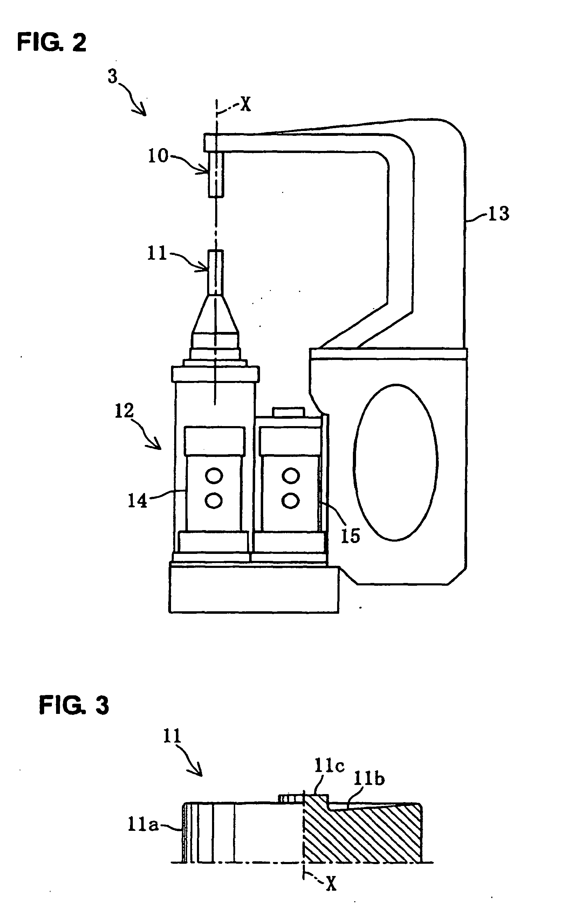

The joining gun **3** comprises a receiving tool **10,** a rotating tool **11,** and a rotating-tool drive mechanism **12** as shown in FIG. **2****.** The receiving tool **10** and the rotating tool **11** are disposed preferably substantially vertically so as to substantially face each other. The receiving tool **10** is detachably attached to an upper tip portion of a reverse-L shaped arm **13,** and the rotating-tool drive mechanism **12** is provided at a lower portion of the arm **13.** The rotating tool **11** is detachably attached to the rotating-tool drive mechanism **12,** which comprises a rotating motor **14** operative to rotate the rotating tool **11** around a joining axis **X** and a shifting or going-up-down motor **15** operative to move the rotating tool 11 (preferably substantially vertically) along the joining axis **X** (or substantially towards and away from the receiving tool **10)** and push the rotating tool **11** against the first and/or second metal members **W1, W2.**

The rotating tool **11** has a shoulder portion **11b** that is formed at a tip face (distal or upper end face) of a body portion **11a** as shown in FIG. **3****.** This shoulder portion **11b** preferably is formed to be not flat, but slant with a specified angle, so that it comprises a recess with a cone shape that has its center substantially aligning with the joining axis **X.** At the center of the shoulder portion **11b** is provided a pin portion **11c.** The receiving tool **10** has substantially the same diameter as that of the rotating tool 11 and its tip face (distal or lower end face) preferably is formed to be flat.

As shown in FIG. 1, the control device **4** is coupled to various electrical actuators (not illustrated) of the robot **2** via a harness **16** so as to control those actuators. Also, it is coupled to the rotating motor **14** and the shifting or going-up-down motor **15** of the joining gun **3** via a harness **17,** a junction box **18** and harnesses **19** so as to control those motors **14, 15.**

Next, the work holding device **5** will be described. As shown in FIGS. **4 - 6****,** the work holding device **5** comprises a work holding table **6,** a positing mechanism 7 to place the first and second metal members **W1, W2** in the at least partly lapping state in a specified (predetermined or predeterminable) position on the work holding table **6,** and a holding or clamp mechanism **8** to hold or clamp the metal members **W1, W2** placed in the specified (predetermined or predeterminable) position. In FIGS, **4** and **5****,** a front direction is denoted by an arrow.

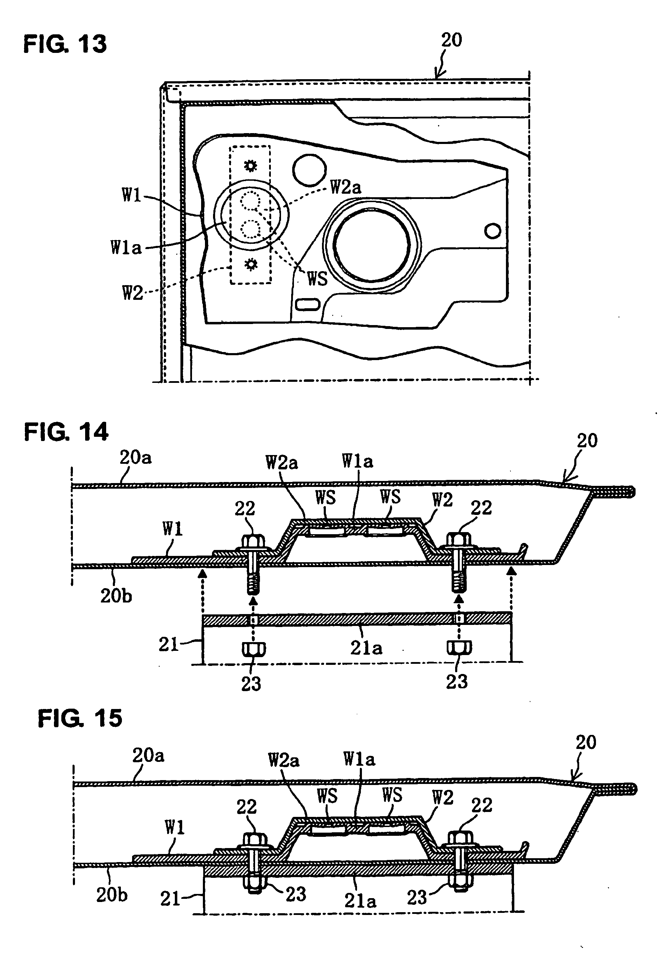

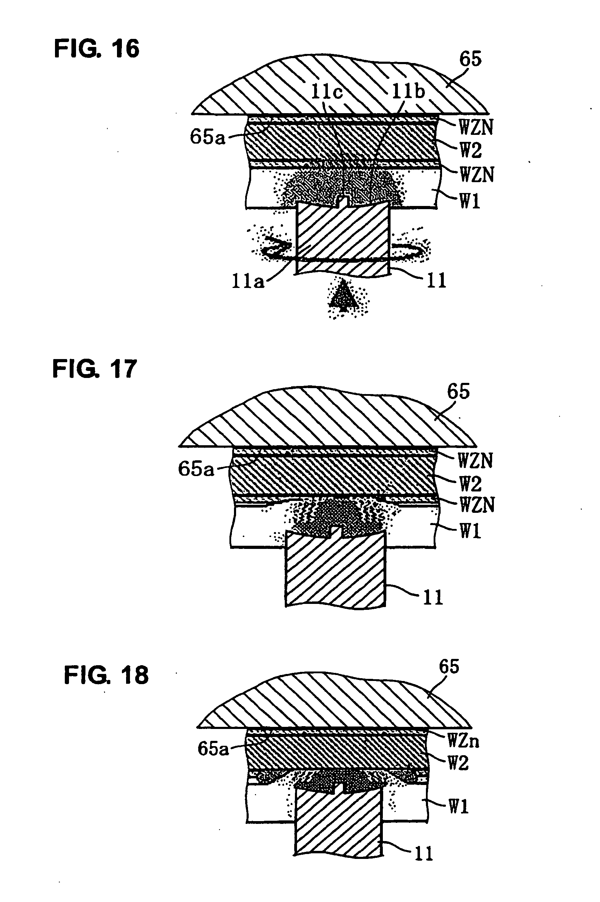

Herein, the first metal member **W1** preferably is of a first material (preferably an aluminum-alloy plate) and an oxidation film is at least partly formed on its surface. The second metal member **W2** preferably is of a second material (preferably a steel plate) whose melting point is higher than that of the first material preferably of the aluminum-alloy plate (first metal member **W1),** and an oxidation preventing treatment (preferably a zinc plating layer WZN) having an oxidation prevention function is at least partly formed on its surface (see FIGS. **16 - 19****).** More specifically, as shown in FIGS. **13 - 15****,** the first metal member **W1** is exemplified to form an aluminum-alloy reinforcement for reinforcing a trunk lid 20 of a vehicle body, and the second metal member **W2** is exemplified to form a steel bolt retainer equipped with a pair of bolts **22** for attaching a hinge **21** to the trunk lid **20.** These members **W1, W2** are joined by the spot joining, so a joining part comprised of the members **W1, W2** is provided. Herein, any metal plating layers other than the above-described zinc plating layer **WZN** may be applied as preferred oxidation preventing treatment, such as Zn-5 wt% Al plating layer, Al-10 wt% Si plating layer.

The trunk lid **20** comprising an outer panel **20a** and an inner panel **20b,** and peripheral portions of these panels are connected via a hemming process to form a closed cross section. A pair of the joining parts comprised of the members **W1, W2** is attached to an inner face of the inner panel **20b.** The first metal member **W1** preferably is of a substantially rectangular shape and its size is a little smaller than a half of size of the inner panel **20b**. At both outer ends of the first metal member **W1** are provided (preferably substantially circular) projecting portions **W1a**. Meanwhile, the second metal member **W2** is of a plate shape, and at its center portion is provided a projecting portion **W2a** that substantially corresponds to the projecting portions **W1a** of the first metal member **W1.** One or more, preferably a pair of bolts 22 for attaching is provided outside the projecting portion **W2a.**

Most part of the second metal member **W2** substantially contacts the first metal member **W1,** and the projecting portions **W1a, W2a** are joined by the spot joining at one or more, e.g. two portions with the bolts **22** being in the penetrating state. The first metal member **W1** contacts the inner panel **20b**, and the bolts **22** penetrate the inner panel **20b** and both plate portions **21** a of the hinge **21** contacting an outer face of the inner panel **20b**. By fastening nuts **23** to the bolts **22,** the hinge **21** and the both metal members **W1, W2** are attached firmly to the inner panel **20b.**

The work holding device **5,** as shown in FIGS. **4 - 6****,** is capable to hold or clamp the two pairs of the metal members **W1, W2** at the same time by the clamp mechanism **8,** placing these members **W1, W2** in the specified (predetermined or predeterminable) position by the positing mechanism **7**. And, the members **W1, W2** held or clamped this way are joined by the spot joining with the robot **2** and the joining gun **3**.

At the work holding table 6 there is provided a table frame 30 comprising a plurality of legs 30a and beams 30b that are connected to each other. A (preferably substantially rectangular) base plate 31 is fixed on the table frame 30. And, a pair of right and left work placing plates 32 are fixed on the base plate 31. The first metal member **W1** is placed on the work placing plates 32 and the second metal member **W2** is placed on the first metal member **W1.**

The positioning mechanism 7 comprises two pairs of positioning pins 40, 41 that are provided so as to project upward at the respective work placing plates 32. The front-side pins 40 are located at or near outside portions of the work placing plates 32, while the rear-side pins 41 are located at intermediate portions (preferably substantially at center portions) of the work placing plates 32. These positioning pins 40, 41 engage with respective positioning holes formed at the first metal member **W1.** There are provided accessing sensors 43 operative to detect the first metal member **W1** placed on the work placing plates 32 at rear portions of the work placing plates 32 that are located inside the positioning pins 41.

The clamp mechanism 8 comprises one or more, preferably two pairs of first and second clamping tools 50, 60 that are provided at both sides for the two pairs of first and second metal members **W1, W2.** Both side portions of joining portions **WS** of the respective first and second metal members **W1, W2** are clamped by the respective first and second clamping tools **50, 60.**

The first clamping tools **50** are provided at or near the front portions of the work placing plates **32,** respectively. Each of the first clamping tools **50** comprises a pair of first clamping members **51** and a support member **55** that is located between the first clamping members **51.** These members **51, 55** preferably are of a partially circular shape, when viewed from above, and located substantially in line with their facing vertical faces contacting each other. These members **51, 55** are fixed on the upper face of the work placing plate **32** with one or more bolts.

The first clamping members **51** include first clamp portions **52** that have a relatively large upper face contacting the first metal member **W1,** respectively. Each of the first clamping members **51** has a bolt hole **53** into which the above-described bolt **22** of the second metal member W2 is at least partly inserted from above. This bolt hole **53** works as a positioning function, and can position the first and second metal members **W1, W2** properly substantially along with the above-described positioning pins **40, 41.** Also, at the respective first clamping members **51** are provided accessing sensors **54** operative to detect the bolts **22** at least partly inserted into the bolt holes **32.**

Herein, at the base plate **31** and the work placing plate **32** are provided rotational-tool passing holes **31 a, 32a.** The rotating tool **11** can get through these holes **31a, 32a** from below or outside the base plate **31** and conduct the spot joining. The support member **55** is provided above the passing holes **31 a**, **32a,** and the support member **55** includes a support portion **58** to support a part between a pair of adjacent joining portions **WS** of the members **W1, W2** from the side of the first clamping tool **50.**

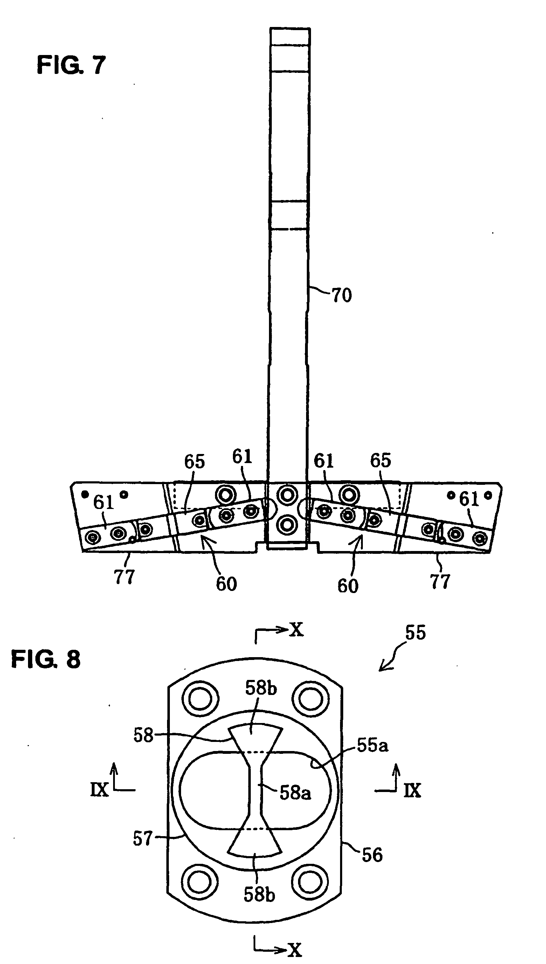

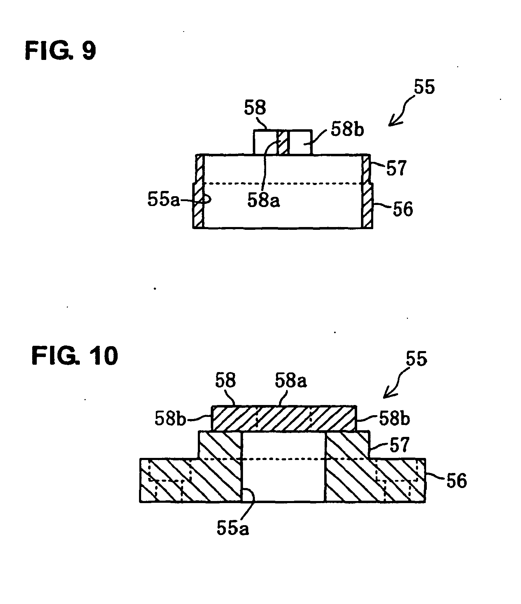

As shown in FIGS. **8 - 10****,** the support member **55** comprises a fixed portion **56** for fixing to the work placing plate **32,** a (preferably substantially circular-shaped) projecting portion **57** projecting upward from the fixed portion **56,** and a support portion **58** fixed to an distal or upper face of the projecting portion **57.** A (preferably substantially oval-shaped) rotational-tool passing hole **55a** are formed at the fixed portion **56** and the projecting portion **57.** The rotating tool **11** can get through this hole 55a from below (or from a side substantially opposite to the spot joining position) and conduct the spot joining. The support portion 58 comprises a bridge part 58a and a fan-shaped part 58b at both ends, which is formed across the center of the passing hole 55a so as to avoid an interference with the rotating tool 11.

As shown in FIGS. **4 - 7****,** and according to the present invention relating to the apparatus, a clamp arm **70** is pivotally attached to the central rear portion of the base plate 31 via a pivotal axis 71. The clamp arm 70 can be located substantially above the work placing plate **32,** taking its first or substantially horizontal position where a front end of the clamp arm 70 is positioned near the front end of the base plate 31. The clamp arm 70 extends rearward from the pivotal axis 71, and a front end of a rod 74 of an air cylinder 73 is pivotally coupled to a base end of the clamp arm 70. The base end of the air cylinder 73 is pivotally coupled to the work holding table 6. These clamp arm 70 and air cylinder 73 constitute a locating device operative to locate a second clamping tool 60 (corresponding to a preferred interposed member), which will be described later, in a joining position at the spot joining.

Pressured air or fluid is supplied to the air or fluid cylinder from the pressured-air or -fluid supplying device (not illustrated), and the air or fluid cylinder 3 is driven with a control of the pressured-air or -fluid supplying device by the control device 4. Thereby, the clamp arm **70** is selected between its substantially horizontal position (first position) and its substantially vertical (upright) position (second position). Herein, a reference numeral 75 denotes a guide member operative to substantially guide the clamp arm 70 around its horizontal position. A pair of connecting members 76 is fixed to the front end of the clamp arm 70, and a pair of clamp bases 77 that are bases of the second clamping tools 60 is fixed to these connecting members 76, respectively.

At each of the respective clamp bases 77 (second clamping tool base) of the one or more second clamping tools 60 (corresponding to a preferred intermediate member) are attached a pair of second clamping members 61 and a receiving member 65 (corresponding to a preferred receiving portion) that is located between these members **61.** At each of the clamp bases **77** is provided a contacting portion 77a that the receiving tool 10 substantially contacts when the spot joining is conducted. A pair of second clamping members 61 and the receiving member 65 preferably is respectively formed substantially in a long rectangular shape, when viewed from above, and located substantially in line with their facing vertical faces contacting each other. These members **61, 65** are fixed to the lower face of the clamp base **77** that faces the work placing plate **32** when the clamp arm **70** is in the horizontal position.

The second clamping tools **61** have second clamp portions **62** that project toward the first clamping tool **50** and contact the second metal member **W2**. The receiving member **65** preferably is made of steel and substantially of a block shape, and it has a contacting face **65a** that is larger than an area of the tip (shoulder portion **11 b)** of the rotating tool **11.** This contacting face **65a** is configured to contact an upper-face specified area portion of the second metal member **W2** that substantially corresponds to the joining portion **WS** and its peripheral part, so that the first and second metal members **W1, W2** can be received by the contacting face **65a** during the joining. The above-described specified area portion of the second metal member **W2** preferably substantially corresponds to an entire top of the projecting portion **W2a** of the second metal member **W2**. Herein, a diameter of the area of the contacting face **65a** of the receiving member 65 preferably is larger, more preferably about 1.2 times as large as a diameter of the shoulder portion 11 **b** of the rotating tool **11** or more, most preferably, about 1.5 times or more.

For joining the first metal member **W1** comprised of the reinforcement and the second metal member **W2** comprised of the bolt retainer at their projecting portions **W1a, W2a,** the receiving member **65** is disposed at a retracted location relative to the second clamping members **61,** and the support portion **58** of the support member **55** of the first clamping tool **50** projects upward or forward relative to the first clamping member **51.**

At a tip portion of the clamp arm **70** is fixed a pushed member **80** that has a slant-shaped engagement portion **80a** that projects toward the tip. When the clamp arm **70** is in the substantially horizontal position (first position), the engagement portion **80a** takes a position to be gently slant forward. Meanwhile, an air or hydraulic drive cylinder **81** is attached to an intermediate portion (preferably substantially a center portion) of the front end of the base plate **31,** and its output rod **82** engages with a slant-shaped drive portion **82a.** This drive portion **82a** is configured to be generally slant as shown in FIG. **4** so as to engage or disengage with the engagement portion **80a.** The pushed member **80** and the drive cylinder **82** form a clamp drive mechanism **83.** This clamp drive mechanism **83** operates and thereby the second clamping tool **60** can be pushed strongly toward the first clamping tool **50.**

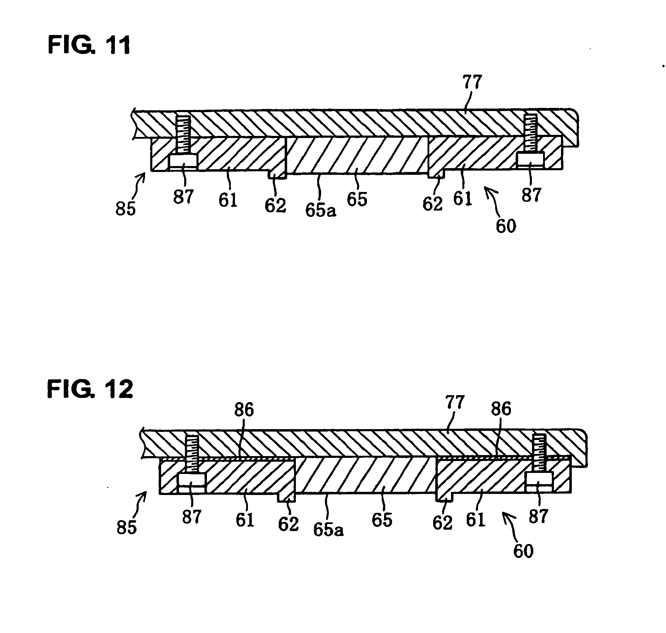

As described above, the second clamping tool **60** comprises a pair of second clamping members **61** having the second clamp portions **62** and the receiving member **65.** And, the frictional spot joining apparatus **1** has a position adjusting mechanism **85** (see FIGS. **11** and **12****),** which can adjust a relative position of the second clamp portions 62 to the contacting face **65a** of the receiving member **65** in a direction at an angle different from 0° or 180°, preferably substantially perpendicular to the faces of the metal members **W1, W2** at the joining portion **WS** (preferably substantially a joining axis parallel direction).

As shown in FIGS. **11** and **12****,** the position adjusting mechanism **85** comprises shims (spacers) **86** operative to be at least partly inserted between the clamp base **77** and the second clamp members **61.** Accordingly, there can be two states where the members **61** are fixed to the clamp base **77** by bolts **87** without any shims **86** as shown in FIG. **11****,** and the members **61** are fixed with the shims 86 as shown in FIG. **12****.** Also, by using a plurality of shims **86** at least partly lapping over and/or different thicknesses of shims **86,** the relative position of the second clamp portion **62** to the contacting face **65a** can be changed properly.

Next, the frictional spot joining method executed by the joining apparatus 1 will be described.

First, the first and second metal members **W1, W2** are set on or mounted to the work placing plate **32** when the clamp arm **70** is in the upright position (second position), i.e., the second clamping tool **60** is away from the first clamping tool 50. Herein, the metal members **W1, W2** are let be in the at least partly lapping state, the pins **40, 41** are let engage with the positioning holes of the first metal member **W1,** and the bolts **22** fixed to the second metal member **W2** are let be inserted into the bolt holes **53** of the first metal member **50.** Thereby, the positioning of the members **W1, W2** is done.

Next, the clamp arm **70** is moved towards or to the horizontal position (first position) from the upright position (second position) by the actuation or drive of the air or fluid cylinder **73.** Subsequently, the first and second metal members **W1, W2** are clamped by the first and second clamping tools 50, 60 with the operation of the clamp drive mechanism **83.** Herein, the both-side portions of the joining portions **WS** of the metal members **W1, W2** (substantially flat portions at both sides of the projecting portion **W1a, W2a)** are pushed (pressed) toward the first clamp portion **52** and thereby these members **W1, W2** are clamped.

In this state, the contacting face **65a** of the receiving member **65** of the second clamping tool **60** substantially contacts the upper-face specified area portion of the second metal member **W2** that substantially corresponds to the joining portion **WS** and its peripheral part. And, portions of the metal members **W1, W2** located between the adjacent joining portions **WS** are supported by the support portion 58 of the support member 55 of the first clamping tool **50.**

Next, the spot joining is conducted to first and second metal members **W1, W2** by the operation of the joining gun **3** and the robot **2.** Herein, the joining gun **3** is moved to the joining position from the standby position by the robot **2.** And, the receiving tool **10** of the joining gun **3** is moved from above and contacts the contacting portion **77a** of the clamp base **77,** and the rotating tool **11** is positioned below the joining portions **SW** of the metal members **W1, W2.**

Subsequently, the rotating tool **11** is rotated by the rotating tool drive mechanism **12,** and contacts the first metal member **W1** and then pushes (presses) the both metal members **W1, W2** against the receiving member **65.** Herein, the receiving tool **10** functions so as to receive the metal members **W1, W2** pushed by the rotating tool **11** via the clamp base **77** and the receiving member **65.** And, at least the first metal member **W1** is softened and made in a substantially plastic flow state by the frictional heat generated through contacting and rotating of the tool **11** against the first metal member **W1.** Thereby, the spot joining is conducted.

Hereinafter, the spot joining will be described. According to increasing of the rotating tool **11,** the pin portion **11c** of the rotating tool **11** is positioned properly at a specified (predetermined or predeterminable) portion on the first metal member **W1.** Then, as shown in FIG. **16****,** the shoulder portion 11 b contacts the first metal member **W1,** which come to be softened by the frictional heat. Subsequently, as the rotating tool 4 increases the rotational speed, as shown in FIG. **17****,** the rotating tool **11** proceeds further into the softened first metal member **W1.** Herein, part of the first metal member **W1,** where a contact pressure with the rotating tool **11** becomes very high, is stirred. The zinc plating layer **WZN** formed on the surface of the second metal member **W2** also comes to be softened by receiving the frictional heat, and is diffused into or moved towards the above-described stirred part of the first metal member **W1.**

Subsequently, as shown in FIG. **18****,** according to pressing of the rotating tool **11,** the shoulder portion **11 b** proceeds further and a plastic flow (plastic deformation) is generated at the first metal member **W1.** At the substantially same time, the softened zinc plating layer **WZN** that remains at or near the boundary face between the first and second metal members **W1, W2** is pushed out. Herein, the oxidation film formed on the surface of the first metal member **W1** is eliminated or destroyed with the plastic deformation due to its rather weakness, so that a new uncovered surface of the first metal member **W1** is exposed.

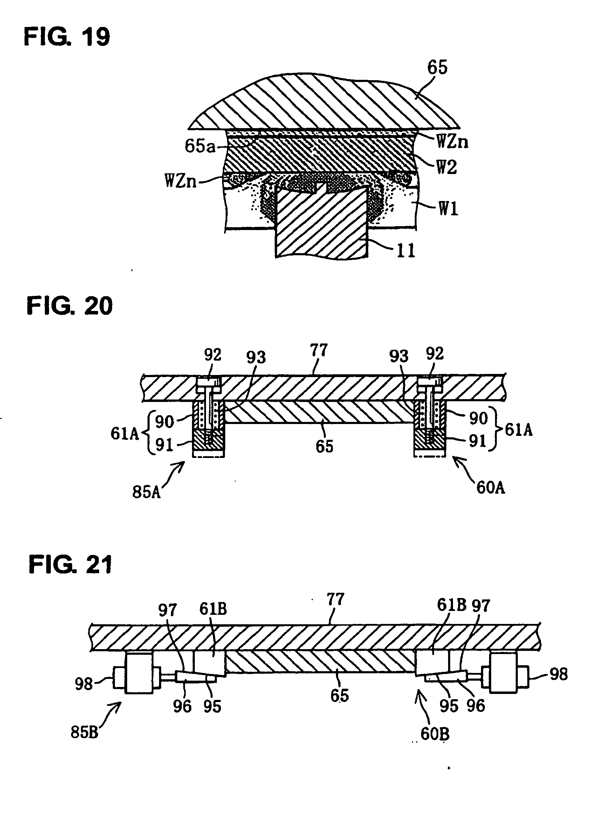

Further, as shown in FIG. 19, part of the zinc plating layer **WZN** on or at the surface of the second metal member **W2** is captured into the first metal member **W1,** and the rest of it is pushed out substantially toward around the joining portion **WS** by the pressing force of the rotating tool **11.** Accordingly, in an area where the zinc plating layer WZN is removed or reduced, the above-described new uncovered surface of the first metal member **W1** and a new surface of the second metal member **W2** contact each other directly (joining in a solid state). And, at a peripheral area where the zinc plating layer WZN substantially remains, the first and second metal members **W1, W2** are joined preferably via a zinc-aluminum-iron compound.

The above-described frictional spot jointing apparatus **1** and frictional spot joining method perform the following effects. Since the both metal members **W1, W2** are pressed against the receiving member **65** by the rotating tool **11,** without the direct contact between the receiving tool **11** having the small area and the second metal member **W2**, any improper deformation of the both metal members **W1, W2** can be substantially avoided during the pressing and the pressure applied to the second metal member **W2** from the receiving member **65** can be reduced properly. Thereby, the first and second metal members **W1, W2** can be received by the receiving member **65** surely, so they are spot-joined surely and properly. Also, the zinc plating layer **WZN** (as the preferred oxidation preventing treatment) on the surface of the second metal member **W2** can be prevented from being separated from the metal member's surface by the receiving member **65,** and any accumulation of the separated oxidation preventing treatment (such as separated plating layer) on the receiving member **65** can be substantially prevented properly. Thus, the deterioration of corrosion resistance and/or joining quality of the metal members **W1, W2** can be prevented, so the high-quality superior joining product of the metal members **W1, W2** can be obtained.

When the zinc plating layer WZN of the second metal member **W2** on the side of the second clamping tool **60** is heated by the frictional heat produced by the contact between the rotating tool **11** and the first metal member **W1,** this heat is radiated from the receiving member **65** that has the larger contacting face **65a** than the joining portion **WS**. Thereby, the heat radiation can be improved, thereby properly preventing the oxidation preventing treatment, preferably the zinc plating layer **WZN,** on the side of the second clamping tool 60 from being softened. Also, since the state of contacting between the receiving member 65 and the zinc plating layer **WZN** can be maintained for a specified (predetermined or predeterminable) period of time from the spot joining, the stationary fixing of the zinc plating layer **WZN** on the side of the second clamping tool 60 can be improved, so the separation of the plating layer **WZN** can be prevented as well.

Further, since the first metal member **W1** preferably is the aluminum-alloy reinforcement for reinforcing the trunk lid **20** of the vehicle body and the second metal member **W2** preferably is the steel bolt retainer equipped with the bolts **22** for attaching the hinge **21** to the trunk lid **20** in the present embodiment, those spot joining can be conducted properly and thus the high-quality joining product of the reinforcement and bolt retainer can be obtained.

Herein, the position adjusting mechanism **85** preferably may be configured to be selectable between states where the receiving members **65** are fixed to the clamp base **77** by bolts without any shims located between them and where the members **65** are fixed with the one or more shims located between them. Also, preferably preferably by using a plurality of shims lapping over and/or different thickness of shims, the relative position of the second clamp portions **62** to the receiving members **65** can be changed properly.

### EMBODIMENT 2

In an embodiment 2, the second clamping tool **60** and the position adjusting mechanism **85** of the embodiment 1 are modified. The other parts are similar or the same as those of the embodiment 1 and so their descriptions are omitted here. As shown in FIG. **20****,** a second clamping tool **60A** of the present embodiment includes a pair of second clamping members **61A** and the similar receiving member **65,** and each of the second clamping members **61A** comprises a base portion **90** and a second clamping portion **91** that fixed to the base portion **90.** In a position adjusting mechanism **85A** of the present embodiment, the second clamp portion **91** is connected so as to be movable relative to the base portion **90** substantially in the above-described joining axis parallel direction and to be biased in a direction substantially opposite to the clamp base **77** by a biasing member **93.**

Herein, respective tips of connecting bolts **92** are screwed into the second clamping portions **91,** the connecting bolts **92** are inserted through the base portions **90** and the clamp base so as to slide therein, and heads of the connecting bolts **92** are engaged in engagement holes formed at the clamp base **77** located so as to move in the holes. The biasing members **93** (e.g., coil spring) are disposed within the base portion **90** to bias or push the second clamp portion **91** against the base portion **90.**

The biasing members **93** are strong enough to adjustably change relative positions between the second clamp portions **91** and the receiving members **65** in the joining axis parallel direction and/or to strongly push or urge the first and second metal members **W1, W2** in any position. Herein, the second clamping member may be fixed to the clamp base **77,** the receiving member **65** may be connected so as to be movable relative to the clamp base **77** substantially in the joining axis parallel direction and to be biased in a direction substantially opposite to the clamp base **77** by the biasing member.

### EMBODIMENT 3

In an embodiment 3, the second clamping tool **60** and the position adjusting mechanism **85** of the embodiment 1 are modified likewise, and the other parts are similar or the same as those of the embodiment 1 and so their descriptions are omitted here. As shown in FIG. **21****,** a second clamping tool **60B** of the present embodiment includes a pair of second clamping members **61 B** and the similar receiving member **65.** Each second pressing portion **95** of the second clamping members 61 **B** has a slant face. A position adjusting mechanism **85A** of the present embodiment includes wedge members **96** having a slant face **97** that slides laterally and contact the second pressing portions **95** respectively and one or more actuators **98** (e.g., air or fluid cylinder, electric motor) to move the respective wedge portions **96.**

### EMBODIMENT 4

Although an illustration is omitted here, in a case where the relative position between the second clamp portion and the contacting face of the receiving member in the direction at an angle different from 0° or 180°, preferably substantially perpendicular to the faces of the metal members **W1, W2** corresponding to the joining portions **WS** is adjusted by the above-described position adjusting mechanisms 85, 85A and 85B, it is preferable that the support position of the first metal member **W1** by the support member **55.** In this case, there may be provided a position adjusting mechanism, which is similar to the mechanisms **85, 85A** and **85B,** operative to adjust the relative position between the first clamp portion 52 and the support portion **58** in the joining axis parallel direction.

The present invention should not be limited to the above-described embodiments, and any other modifications and improvements may be applied within the scope of the present invention as defined in the appended claims.

## Claims

1. A frictional spot joining method, in which first and second metal members **(W1, W2)** that lap over are jointed substantially in a solid state with a joining gun **(3)** having a rotating tool **(11)** and a receiving tool **(10)** that are disposed to face each other, the second metal member **(W2)** having a higher melting point than the first metal member **(W1)** and a metal plating layer **(WZN)** at least partly formed on its surface, the rotating tool **(11)** being configured to be pushed against the first metal member **(W1)** under a rotation such that the first and second metal members **(W1, W2)** are pressed against the receiving tool **(10)** and the first metal member **(W1)** is softened and made substantially in a plastic flow state by a frictional heat generated by the rotating tool **(11),** the method **characterised by**
a step of providing an interposed member **(60)** at a joining portion **(WS)** of the first and second metal members **(W1, W2)** so as to be located on a side of the second metal member **(W2)**, the interposed member **(60)** and the first and second metal members **(W1, W2)** at least partly lapping over being configured to be located between the rotating tool **(11)** and the receiving tool (10) of the joining gun **(3)** at a spot joining, the interposed member **(60)** having a receiving portion **(65)** located on a side of the rotating tool **(11)** and a contacting portion **(77a)** located on a side of the receiving tool **(10),** the receiving portion (**65**) being operative to contact the metal plating layer **(WZN)** of the second metal member **(W2)** at the spot joining and having an area that is larger than an area of a tip **(11b)** of the rotating tool **(11),** the contacting portion **(77a)** being operative to contact the receiving tool **(10)** of the joining gun **(3)** at the spot joining;
a step of locating the joining gun **(3)** in a joining position; and
a step of pushing the rotating tool **(11)** under the rotation against the first metal member **(W1)** in a state in which the receiving portion **(65)** of the interposed member **(60)** contacts the metal plating layer **(WZN)** of the second metal member **(W2)** and the contacting portion **(77a)** of the interposed member **(60)** contacts the receiving tool **(10)** of the joining gun **(3),**
whereby the first and second metal members **(W1, W2)** can be pressed against the receiving tool **(10)** of the joining gun **(3)** via the interposed member **(60).**

2. The frictional spot joining method of claim 1, wherein part of the metal plating layer **(WZN)** on the second metal member **(W2)** is softened by a frictional heat generated by the rotation of the rotating tool **(11),** and the softened part of the metal plating layer **(WZN)** is pushed out by pushing of the rotating tool **(11),** whereby the first and second metal members **(W1, W2)** can be joined substantially in the solid state with substantially no metal plating layer remaining at the joining portion **(WS)** between the first and second metal members **(W1, W2).**

3. The frictional spot joining method of one of the preceding claims, wherein said first metal member **(W1)** is an aluminum-alloy plate, said second metal member **(W2)** is a steel plate, and said metal plating layer **(WZN)** is a zinc plating layer.

4. The frictional spot joining method **(1)** of one of the preceding claims, further comprising the steps of:
providing an aluminum-alloy plate as said first metal member **(W1),**
providing a steel plate as said second metal member **(W2),**
providing a plurality of joining portions **(WS, WS)** at the first and second members **(W1, W2),** and
providing a support member **(55)** to support a part between adjacent joining portions **(WS, WS)** of the first and second members **(W1, W2)** from a side of the first clamping tool **(50)**.

5. A frictional spot joining apparatus **(1),** in which first and second metal members **(W1, W2)** that at least partly lap over are jointed substantially in a solid state with a joining gun **(3)** having a rotating tool **(11)** and a receiving tool **(10)** that are disposed to face each other, the second metal member **(W2)** having a higher melting point than the first metal member **(W1)** and a metal plating layer **(WZN)** at least partly formed on its surface, the rotating tool **(11)** being configured to be pushed against the first metal member **(W1)** under a rotation such that the first and second metal members **(W1, W2)** are pressed against the receiving tool **(10)** and the first metal member **(W1)** is softened and made substantially in a plastic flow state by a frictional heat generated by the rotating tool **(11),** the apparatus (**1**) **characterised by** a work holding table (6),
an interposed member **(60)** operative to be provided at a joining portion **(WS)** of the first and second metal members **(W1, W2)** so as to be located on a side of the second metal member **(W2),** the interposed member **(60)** and the first and second metal members **(W1, W2)** at least partly lapping over being configured to be located between the rotating tool **(11)** and the receiving tool **(10)** of the joining gun **(3)** at a spot joining, the interposed member **(60)** having a receiving portion **(65)** located on a side of the rotating tool **(11)** and a contacting portion **(77a)** located on a side of the receiving tool **(10),** the receiving portion (**65**) being operative to contact the metal plating layer **(WZN)** of the second metal member **(W2)** at the spot joining and having an area that is larger than an area of a tip **(11b)** of the rotating tool **(11),** the contacting portion **(77a)** being operative to contact the receiving tool **(10)** of the joining gun **(3)** at the spot joining;
a rotating-tool drive device **(12)** operative to push the rotating tool **(11)** under the rotation against the first metal member **(W1)** in a state in which the receiving portion **(65)** of the interposed member **(60)** contacts the metal plating layer **(WZN)** of the second metal member **(W2)** and the contacting portion **(77a)** of the interposed member **(60)** contacts the receiving tool **(10)** of the joining gun **(3);** and
a moving device **(2)** operative to move the joining gun **(3)** between a joining conducting position for conducting the spot joining to the first and second metal members **(W1, W2)** and a standby position away from the joining conducting position,
whereby the first and second metal members **(W1, W2)** can be pressed against the receiving tool **(10)** of the joining gun **(3)** via the interposed member **(60),**
a locating device **(70**, **73)** operative to locate said interposed member **(60)** in a joining position at the spot joining and to be located substantially above a work placing plate (32), said locating device (70, 73) comprising a clamp arm (70) and an air or fluid cylinder (73), wherein the clamp arm (70) is pivotally attached to a central portion of a base plate (31) via a pivotal axis (71) and extends rearward from the pivotal axis (71) a front end of a rod (74) of the air or fluid cylinder (73) is pivotally coupled to a base end of the clamp arm (70) and the base end of the air a fluid cylinder (73) is pivotally coupled to the work holding table (16).

6. The frictional spot joining apparatus (1) of claim 5, further comprising a clamping tool (50) provided at a rear the front portion of the work placing plate (32) and comprising a pair of clamping members (51) and a support member (55) located between the clamping members (51), the clamping members (51) having bolt holes (53) into which bolts (22) of the second metal member (W2) are insertable.

7. The frictional spot joining apparatus **(1)** of claim 5 or 6, wherein said interposed member **(60)** comprises a clamping tool **(60)** that includes a clamp portion **(62)** to clamp a portion of the second metal member **(W2)** near the joining portion **(WS).**

8. The frictional spot joining apparatus **(1)** of claim 7, wherein said clamping tool **(60)** comprises said clamp portion **(62)** and said receiving potion **(65)** that are formed separately, and there is provided a position adjusting mechanism **(85, 85A, 85B)** operative to adjust a relative position of the clamp portion **(62)** to the receiving portion **(65)** in a direction at an angle different from 0° or **180°,** preferably substantially perpendicular to a face of the second metal member **(W2)** at the joining portion **(WS).**

9. The frictional spot joining apparatus **(1)** of one of the preceding claims 5 to 8, wherein said interposed member **(60)** comprises a second clamping tool **(60)** that includes a clamp portion **(62)** to clamp a portion of the second metal member **(W2)** near the joining portion **(WS)**, and the first clamping tool **(50)** is provided to face the second clamping tool **(60)** and includes a clamp portion **(52)** to clamp a portion of the first metal member **(W1)** near the joining portion **(WS).**

10. The frictional spot joining apparatus **(1)** of one of the preceding claims 5 to 9, wherein said moving device **(2)** is a robot.

## Patentansprüche

1. Verfahren zur Punktverbindung durch Reibung, bei dem ein erstes und ein zweites Metallteil **(W1, W2),** die sich überlappen, im Wesentlichen im festen Zustand verbunden werden mittels einer Verbindungspistole (*joining gun*) **(3),** die ein rotierendes Werkzeug **(11)** und ein empfangendes Werkzeugs **(10)** aufweist, welche sich gegenüberstehend angeordnet sind, wobei das zweite Metallteil **(W2)** einen höheren Schmelzpunkt aufweist als das erste Metallteil **(W1)** und eine zumindest teilweise auf seiner Oberfläche gebildete Metallplattierungsschicht **(WZN)** aufweist, wobei das rotierende Werkzeug **(11)** dazu konfiguriert ist, derart bei einer Rotation gegen das erste Metallteil **(W1)** gedrückt zu werden, dass das erste und das zweite Metallteil **(W1, W2)** gegen das empfangende Werkzeug **(10)** gedrückt werden, und dass das erste Metallteil **(W1)** durch Reibungswärme, die durch das rotierende Werkzeug **(11)** generiert wird, aufgeweicht wird und im Wesentlichen in einen plastischen Fließzustand gebracht wird, wobei das Verfahren durch Folgendes **gekennzeichnet** ist:
einen Schritt der Bereitstellens eines Zwischenteils **(60)** in einem Verbindungsbereich **(WS)** des ersten und zweiten Metallteils **(W1, W2),** sodass es sich an einer Seite des zweiten Metallteils **(W2)** befindet, wobei sich das Zwischenteil **(60)** und das erste und zweite Metallteil **(W1, W2)** zumindest teilweise überlappen und dazu konfiguriert sind, sich bei einer Punktverbindung zwischen dem rotierenden Werkzeug **(11)** und dem empfangenden Werkzeug **(10)** der Verbindungspistole **(3)** zu befinden, wobei das Zwischenteil **(60)** einen empfangenden Bereich **(65)** aufweist, der sich an einer Seite des rotierenden Werkzeugs **(11)** befindet, und einen kontaktierenden Bereich **(77a),** der sich an einer Seite des empfangenden Werkzeugs **(10)** befindet, wobei der empfangende Bereich **(65)** dazu geeignet ist, die Metallplattierungsschicht **(WZN)** des zweiten Metallteils **(W2)** bei der Punktverbindung zu berühren (*to contact*), und eine Fläche aufweist, die größer ist als die Fläche einer Spitze **(11b)** des rotierenden Werkzeugs **(11),** wobei der kontaktierende Bereich **(77a)** dazu geeignet ist, das empfangende Werkzeug **(10)** der Verbindungspistole **(3)** bei der Punktverbindung zu berühren;
einen Schritt des Lokalisierens der Verbindungspistole **(3)** an einer Verbindungsposition; und
einen Schritt des Drückens des rotierenden Werkzeugs **(11)** bei der Rotation gegen das erste Metallteil **(W1),** in einem Zustand in dem der empfangende Bereich **(65)** des Zwischenteils **(60)** die Metallplattierungsschicht **(WZN)** des zweiten Metallteils **(W2)** berührt und der kontaktierende Bereich **(77a)** des Zwischenteils **(60)** das empfangende Werkzeug **(10)** der Verbindungspistole **(3)** berührt,
wobei das erste und das zweite Metallteil **(W1, W2)** über das Zwischenteil **(60)** gegen das empfangende Werkzeug **(10)** der Verbindungspistole **(3)** gedrückt werden können.

2. Das Verfahren zur Punktverbindung durch Reibung nach Anspruch 1, wobei ein Teil der Metallplattierungsschicht **(WZN)** des zweiten Metallteils **(W2)** durch Reibungswärme erweicht wird, die durch die Drehung des rotierenden Werkzeugs **(11)** generiert wird, und wobei der erweichte Teil der Metallplattierungsschicht **(WZN)** durch das Drücken des rotierenden Werkzeugs **(11)** herausgedrückt wird, wobei das erste und das zweite Metallteil **(W1, W2)** im Wesentlichen im festen Zustand verbunden werden können im Wesentlichen ohne Überreste der Metallplattierungsschicht im Verbindungsbereich **(WS)** zwischen dem ersten und dem zweiten Metallteil **(W1, W2).**

3. Das Verfahren zur Punktverbindung durch Reibung nach einem der vorhergehenden Ansprüche, wobei das genannte erste Metallteil **(W1)** eine Aluminiumlegierungsplatte ist, wobei das genannte zweite Metallteil **(W2)** eine Stahlplatte ist und die genannte Metallplattierungsschicht **(WZN)** eine Zinkplattierungsschicht ist.

4. Das Verfahren **(1)** zur Punktverbindung durch Reibung nach einem der vorhergehenden Ansprüche, das des Weiteren folgende Schritte umfasst:
Bereitstellen einer Aluminiumlegierungsplatte als genanntes erstes Metallteil **(W1),**
Bereitstellen einer Stahlplatte als genanntes zweites Metallteil **(W2),**
Bereitstellen einer Vielzahl an Verbindungsbereichen **(WS, WS)** am ersten und zweiten Metallteil **(W1, W2),** und
Bereitstellen eines Stützteils **(55),** um einen Teil zwischen angrenzenden Verbindungsbereichen **(WS, WS)** des ersten und dem zweiten Metallteil **(W1, W2)** von einer Seite des ersten Klemmwerkzeugs **(50)** zu stützen.

5. Vorrichtung **(1)** zur Punktverbindung durch Reibung, in der ein erstes und ein zweites Metallteil **(W1, W2),** die sich zumindest teilweise überlappen, im Wesentlichen im festen Zustand verbunden werden mittels einer Verbindungspistole **(3),** die ein rotierendes Werkzeug **(11)** und eines empfangendes Werkzeug **(10)** aufweist, welche sich gegenüberstehend angeordnet sind, wobei das zweite Metallteil **(W2)** einen höheren Schmelzpunkt aufweist als das erste Metallteil **(W1)** und eine zumindest teilweise auf seiner Oberfläche gebildete Metallplattierungsschicht **(WZN)** aufweist, wobei das rotierende Werkzeug **(11)** dazu konfiguriert ist, bei einer Rotation derart gegen das erste Metallteil **(W1)** gedrückt zu werden, dass das erste und das zweite Metallteil **(W1, W2)** gegen das empfangende Werkzeug **(10)** gedrückt werden, und dass das erste Metallteil **(W1)** durch Reibungswärme, die durch das rotierende Werkzeug **(11)** generiert wird, aufgeweicht wird und im Wesentlichen in einen plastischen Fließzustand gebracht wird, wobei die Vorrichtung **(1) gekennzeichnet ist durch** einen Werkstückhaltetisch **(6),**
ein Zwischenteil **(60),** dessen Funktion darin besteht, in einem Verbindungsbereich **(WS)** des ersten und zweiten Metallteils **(W1, W2)** bereitgestellt zu werden, sodass es sich an einer Seite des zweiten Metallteils **(W2)** befindet, wobei sich das Zwischenteil **(60)** und das erste und zweite Metallteil **(W1, W2)** zumindest teilweise überlappen und dazu konfiguriert sind, sich bei einer Punktverbindung zwischen dem rotierenden Werkzeug **(11)** und dem empfangenden Werkzeug **(10)** der Verbindungspistole **(3)** zu befinden, wobei das Zwischenteil **(60)** einen empfangenden Bereich **(65)** aufweist, der sich an einer Seite des rotierenden Werkzeugs **(11)** befindet, und einen kontaktierenden Bereich **(77a),** der sich an einer Seite des empfangenden Werkzeugs **(10)** befindet, wobei der empfangende Bereich **(65)** dazu geeignet ist, die Metallplattierungsschicht **(WZN)** des zweiten Metallteils **(W2)** bei der Punktverbindung zu berühren, und eine Fläche aufweist, die größer ist als die Fläche einer Spitze **(11b)** des rotierenden Werkzeugs **(11),** wobei der kontaktierende Bereich **(77a)** dazu geeignet ist, das empfangende Werkzeug **(10)** der Verbindungspistole **(3)** bei der Punktverbindung zu berühren;
einen Antriebsvorrichtung **(12)** des rotierenden Werkzeugs, die dazu geeignet ist, das rotierende Werkzeugs **(11)** bei der Rotation gegen das erste Metallteil **(W1)** zu drücken, in einem Zustand in dem der empfangende Bereich **(65)** des Zwischenteils **(60)** die Metallplattierungsschicht **(WZN)** des zweiten Metallteils **(W2)** berührt und der kontaktierende Bereich **(77a)** des Zwischenteils **(60)** das empfangende Werkzeug **(10)** der Verbindungspistole **(3)** berührt; und
eine Bewegungsvorrichtung **(2)** die dazu geeignet ist, die Verbindungspistole **(3)** zwischen einer Verbindungsleitungsposition (*joining conducting position*) zur Leitung der Punktverbindung zu einem ersten und zweiten Metallteil **(W1, W2)** und einer Bereitstellungsposition fern von der Verbindungsleitungsposition zu bewegen,
wobei das erste und das zweite Metallteil **(W1, W2)** über das Zwischenteil **(60)** gegen das empfangende Werkzeug **(10)** der Verbindungspistole **(3)** gedrückt werden können,
eine Lokalisierungsvorrichtung **(70, 73),** die dazu geeignet ist, das Zwischenteil **(60)** in einer Verbindungsposition bei der Punktverbindung zu lokalisieren und sich im Wesentlichen oberhalb einer Werkstück-Anordnungsptatte (*work placing plate*) **(32)** zu befinden, wobei die genannte Lokalisierungsvorrichtung **(70, 73)** einen Klemmarm **(70)** und einen Luft- oder einen Fluidzylinder **(73)** umfasst, wobei der Klemmarm (70) mittels einer Schwenkachse **(71)** schwenkbar an einem mittleren Abschnitt der Basisplatte **(31)** angebracht ist und von der Schwenkachse **(71)** nach hinten hin verläuft, wobei ein vorderes Ende eines Stabs **(74)** des Luft- oder Fluidzylinders **(73)** schwenkbar an ein Fußende des Klemmarms **(70)** gekoppelt ist, und wobei das Fußende des Luft- oder Fluidzylinders **(73)** schwenkbar mit dem Werkstückhaltetisch **(6)** gekoppelt ist.

6. Die Vorrichtung **(1)** zur Punktverbindung durch Reibung nach Anspruch 5, die des Weiteren ein Klemmwerkzeug **(50)** umfasst, das hinter einem vorderen Bereich der Werkstück-Anordnungsplatte **(32)** bereitgestellt wird, und das ein Paar Klemmglieder **(51)** und ein zwischen den Klemmgliedem **(51)** liegendes Stützglied **(55)** umfasst, wobei die Klemmglieder **(51)** Bolzenlöcher **(53),** in die Bolzen **(22)** des zweiten Metallteils **(W2)** einsetzbar sind.

7. Die Vorrichtung **(1)** zur Punktverbindung durch Reibung nach Anspruch 5 oder 6, wobei das genannte Zwischenstück **(60)** ein Klemmwerkzeug **(60)** umfasst, das einen Klemmbereich **(62)** enthält, um einen Bereich des zweiten Metallteils **(W2)** in der Nähe des Verbindungsbereich **(WS)** zu klemmen.

8. Die Vorrichtung **(1)** zur Punktverbindung durch Reibung nach Anspruch 7, wobei das genannte Klemmwerkzeug **(60)** den genannten Klemmbereich **(62)** und den genannten empfangenden Bereich **(65)** umfasst, die getrennt gebildet werden, und wobei ein Positions-Einstellmechanismus **(85, 85A, 85B)** bereitgestellt wird, der dazu geeignet ist, eine Position des Klemmbereichs (62) relativ zum empfangenden Bereich **(65)** in einer Richtung einzustellen, deren Winkel sich von 0° und 180° unterscheidet und die vorzugsweise im Wesentlichen senkrecht zu einer Fläche des zweiten Metallteils **(W2)** im Verbindungsbereich **(WS)** ist.

9. Die Vorrichtung **(1)** zur Punktverbindung durch Reibung nach einem der vorhergehenden Ansprüche von 5 bis 8, wobei das genannte Zwischenstück **(60)** ein zweites Klemmwerkzeug **(60)** umfasst, das einen Klemmbereich **(62)** enthält, um einen Bereich des zweiten Metallteils **(W2)** in der Nähe des Verbindungsbereich **(WS)** zu klemmen, und wobei das erste Klemmwerkzeug **(50)** bereitgestellt wird, um dem zweiten Klemmwerkzeug **(60)** gegenüberzustehen und einen Klemmbereich **(52)** umfasst, um einen Bereich des ersten Metallteils **(W1)** in der Nähe des Verbindungsbereich **(WS)** zu klemmen.

10. Die Vorrichtung **(1)** zur Punktverbindung durch Reibung nach einem der vorhergehenden Ansprüche von 5 bis 9, wobei die genannte Bewegungsvorrichtung **(2)** ein Roboter ist.

## Revendications

1. Procédé d'assemblage par points par friction, dans lequel une première et une deuxième pièce en métal **(W1, W2),** qui se chevauchent, sont assemblées essentiellement à l'état solide par un pistolet d'assemblage **(3)** présentant un outil rotatif **(11)** et un outil de réception **(10)** qui sont disposés l'un en face de l'autre, sachant que la deuxième pièce en métal **(W2)** présente un point de fusion plus élevé que la première pièce **(W1)** et une couche de placage métallique **(WZN)** constituée au moins en partie sur sa surface, l'outil rotatif **(11)** étant configuré de manière à être poussé en rotation contre la première pièce métallique **(W1)** de manière que la première et la deuxième pièce métallique **(W1, W2)** sont pressées contre l'outil de réception **(10)** et que la première pièce métallique **(W1)** est ramollie et portée dans un état de fluage à déformation plastique par la chaleur de friction générée par l'outil rotatif **(11),** le procédé étant **caractérisé par**
une étape dans laquelle une pièce interposée **(60)** est fournie dans une portion d'assemblage **(WS)** de la première et de la deuxième pièce métallique **(W1, W2),** de manière à se trouver d'un côté de la deuxième pièce en métal **(W2),** la pièce interposée **(60)** et la première et la deuxième pièce métallique **(W1, W2),** se chevauchant au moins en partie, étant configurées de manière à se trouver entre l'outil rotatif **(11)** et l'outil de réception **(10)** du pistolet d'assemblage **(3)** à l'endroit de l'assemblage par points, la pièce interposée **(60)** présentant une portion de réception **(65)** située d'un côté de l'outil rotatif **(11)** et une portion de contact **(77a)** située d'un côté de l'outil de réception **(10),** la portion de réception **(65)** étant capable de contacter (*to contact*) la couche de placage métallique **(WZN)** de la deuxième pièce en métal **(W2)** à l'endroit de l'assemblage par points et présentant une aire plus grande qu'une aire d'un bout (*tip*) **(11b)** de l'outil rotatif **(11),** la portion de contact **(77a)** étant capable de contacter l'outil de réception **(10)** du pistolet d'assemblage **(3)** à l'endroit de l'assemblage par points ;
une étape dans laquelle le pistolet d'assemblage **(3)** est localisé dans une position d'assemblage ; et
une étape dans laquelle l'outil rotatif **(11)** est poussé en rotation contre la première pièce métallique **(W1)** dans un état dans lequel la portion de réception **(65)** de la pièce interposée **(60)** est en contact avec la couche de placage métallique **(WZN)** de la deuxième pièce en métal **(W2),** et dans lequel la portion de contact **(77a)** de la pièce interposée **(60)** est en contact avec l'outil de réception **(10)** du pistolet d'assemblage **(3),**
sachant que la première et la deuxième pièce métallique **(W1, W2)** peuvent être pressées contre l'outil de réception **(10)** du pistolet d'assemblage **(3)** au moyen de la pièce interposée **(60).**

2. Le procédé d'assemblage par points par friction d'après la revendication 1, pour lequel une partie de la couche de placage métallique **(WZN)** de la deuxième pièce en métal **(W2)** est ramollie par la chaleur de friction générée par la rotation de l'outil rotatif **(11),** et pour lequel la partie ramollie de la couche de placage métallique **(WZN)** est poussée vers l'extérieur par la poussée de l'outil rotatif **(11),** sachant que la première et la deuxième pièce métallique **(W1, W2)** peuvent être assemblées essentiellement à l'état solide essentiellement sans résidus de la couche de placage métallique dans le domaine de la portion d'assemblage **(WS)** entre la première et la deuxième pièce métallique **(W1, W2).**

3. Le procédé d'assemblage par points par friction d'après une des revendications précédentes, pour lequel la dite première pièce métallique **(W1)** est une plaque en alliage d'aluminium, la dite deuxième pièce métallique **(W2)** est une plaque en acier et la dite couche de placage métallique **(WZN)** est une couche de plaquage en zinc.

4. Le procédé d'assemblage par points par friction d'après une des revendications précédentes, comprenant en outre les étapes suivantes :
fournir une plaque en alliage d'aluminium en tant que la dite première pièce métallique **(W1)**
fournir une plaque en acier en tant que la dite deuxième pièce métallique **(W2),**
fournir une pluralité de portions d'assemblage **(WS, WS)** auprès de la première et de la deuxième pièce métallique **(W1, W2),** et
fournir une pièce de support **(55)** pour soutenir une partie entre des portions d'assemblage **(WS, WS)** adjacentes de la première et de la deuxième pièce métallique **(W1, W2)** d'un côté du premier outil de serrage **(50).**

5. Un dispositif d'assemblage par points par friction **(1),** dans lequel une première et une deuxième pièce en métal **(W1, W2),** qui se chevauchent au moins en partie, sont assemblées essentiellement à l'état solide par un pistolet d'assemblage **(3)** présentant un outil rotatif **(11)** et un outil de réception **(10)** qui sont disposés l'un en face de l'autre, sachant que la deuxième pièce en métal **(W2)** présente un point de fusion plus élevé que la première pièce **(W1)** et une couche de placage métallique **(WZN)** constituée au moins en partie sur sa surface, l'outil rotatif **(11)** étant configuré de manière à être poussé en rotation contre la première pièce métallique **(W1)** de manière que la première et la deuxième pièce métallique **(W1, W2)** sont pressées contre l'outil de réception **(10)** et que la première pièce métallique **(W1)** est ramollie et portée dans un état de fluage à déformation plastique par une chaleur de friction générée par l'outil rotatif **(11),** le dispositif **(1)** étant **caractérisé par** une table de serrage de pièce d'oeuvre **(6),**
une pièce interposée **(60)** apte à être fournie auprès d'une portion d'assemblage **(WS)** de la première et de la deuxième pièce en métal **(W1, W2),** de manière à être située d'un côté de la deuxième pièce en métal **(W2),** la pièce interposée **(60)** et la première et la deuxième pièce métallique **(W1, W2)** se chevauchant au moins en partie étant configurées de manière à être situées entre l'outil rotatif **(11)** et l'outil de réception **(10)** du pistolet d'assemblage **(3)** à l'endroit de l'assemblage par points, la pièce interposée **(60)** présentant une portion de réception **(65)** située d'un côté de l'outil rotatif **(11)** et une portion de contact **(77a)** située d'un côté de l'outil de réception **(10),** la portion de réception **(65)** étant capable de contacter (*to contact*) la couche de placage métallique **(WZN)** de la deuxième pièce en métal **(W2)** à l'endroit de l'assemblage par points et présentant une aire plus grande qu'une aire d'un bout **(11b)** de l'outil rotatif **(11),** la portion de contact **(77a)** étant capable de contacter l'outil de réception **(10)** du pistolet d'assemblage **(3)** à l'endroit de l'assemblage par points ;
un dispositif d'entraînement d'outil rotatif **(12)** capable de pousser l'outil rotatif **(11)** en rotation contre la première pièce métallique **(W1)** dans un état dans lequel la portion de réception **(65)** de la pièce interposée **(60)** est en contact avec la couche de placage métallique **(WZN)** de la deuxième pièce en métal **(W2),** et dans lequel la portion de contact **(77a)** de la pièce interposée **(60)** est en contact avec l'outil de réception **(10)** du pistolet d'assemblage **(3) ;** et
un dispositif de déplacement **(2)** capable de déplacer le pistolet d'assemblage **(3)** entre une position de conduite à l'assemblage (*joining conducting position*) pour conduire l'action d'assemblage par points à la première et à la deuxième pièce métallique **(W1, W2)** et une position d'attente éloignée de la position de conduite à l'assemblage,
sachant que la première et la deuxième pièce métallique **(W1, W2)** peuvent être pressées contre l'outil de réception **(10)** du pistolet d'assemblage **(3)** au moyen de la pièce interposée **(60),**
un dispositif de localisation **(70, 73)** capable de localiser la dite pièce interposée **(60)** dans une position d'assemblage à l'endroit de l'assemblage par points et d'être localisé essentiellement au-dessus de la plaque de placement de pièce d'oeuvre **(32),** le dit dispositif de localisation **(70, 73)** comprenant un bras de serrage **(70)** et un cylindre à air ou à fluide **(73),** sachant que le bras de serrage **(70)** est attaché de façon pivotante à une portion centrale d'une plaque de base **(31)** au moyen d'un axe de pivotement **(71)** et s'étend en arrière à partir de l'axe de pivotement **(71),** et qu'une extrémité frontale d'une tige **(74)** du cylindre à air ou à fluide **(73)** est couplée de manière pivotante à l'extrémité de base du bras de serrage **(70)** et qu'une extrémité de base du cylindre à air ou à fluide **(73)** est couplée de manière pivotante à la table de serrage de pièce d'oeuvre **(6).**

6. Le dispositif d'assemblage par points par friction **(1)** d'après la revendication 5, comprenant en outre un outil de serrage **(50),** fourni à l'arrière de la portion frontale de la plaque de placement de pièce d'oeuvre **(32),** comprenant une paire de pièces de serrage **(51)** et une pièce de support **(55)** située entre les pièces de serrage **(51),** sachant que les pièces de serrage **(51)** présentent des trous de boulon **(53)** dans lesquels on peut insérer des boulons **(22)** de la deuxième pièce en métal **(W2).**

7. Le dispositif d'assemblage par points par friction **(1)** d'après la revendication 5 ou 6, pour lequel la dite pièce interposée **(60)** comprend un outil de serrage **(60)** qui contient une portion de serrage **(62)** pour serrer une portion de la deuxième pièce en métal **(W2)** à proximité de la portion d'assemblage **(WS).**

8. Le dispositif d'assemblage par points par friction **(1)** d'après la revendication 7, sachant que le dit outil de serrage **(60)** comprend la dite portion de serrage **(62)** et la dite portion de réception **(65),** qui sont formées séparément, et qu'on fournit un mécanisme d'ajustage de position **(85, 85A, 85B)** capable d'ajuster une position relative de la portion de serrage **(62)** par rapport à la portion de réception **(65)** dans une direction présentant un angle autre que 0° ou 180°, de préférence essentiellement verticale pa rapport à une face de la deuxième pièce en métal **(W2)** auprès de la portion d'assemblage **(WS).**

9. Le dispositif d'assemblage par points par friction **(1)** d'après une des revendications précédentes de 5 à 8, sachant que la dite pièce interposée **(60)** comprend un deuxième outil de serrage **(60)** qui comprend une portion de serrage **(62)** pour serrer une portion de la deuxième pièce en métal **(W2)** auprès de la portion d'assemblage **(WS),** et que le premier outil de serrage **(50)** est fourni pour se trouver en face du deuxième outil de serrage **(60)** et comprend une portion de serrage **(52** pour serrer une portion de la première pièce métallique **(W1)** auprès de la portion d'assemblage **(WS).**

10. Le dispositif d'assemblage par points par friction **(1)** d'après une des revendications précédentes de 5 à 9, sachant que le dit dispositif de déplacement **(2)** est un robot.
